# EUROPÄISCHE PATENTSCHRIFT

(11) **EP 3 779 365 B1**
(45) Veröffentlichungstag und Bekanntmachung des Hinweises auf die Patenterteilung: **27.10.2021**
(21) Anmeldenummer: 20184170.7
(22) Anmeldetag: 06.07.2020
(51) Int. Cl.: G01D 3/08, G01D 3/036

(54) **VERFAHREN UND SYSTEM MIT EINEM SENSOR**
METHOD AND SYSTEM WITH A SENSOR
PROCÉDÉ ET SYSTÈME DOTÉ D'UN CAPTEUR

(30) Priorität: 13.08.2019 DE 102019121800
(43) Veröffentlichungstag der Anmeldung: 17.02.2021
(73) Patentinhaber: SICK AG, 79183 Waldkirch (DE)
(72) Erfinder: Hofstätter, Daniel, 79312 Emmendingen (DE); Esslinger, Andreas, 79104 Freiburg (DE)

(56) Entgegenhaltungen:
- DE-A1-102008 038 417
- DE-A1-102010 029 952
- DE-A1-102017 104 912
- US-A1- 2016 182 285

## Beschreibung

Die vorliegende Erfindung betrifft ein System mit einem Sensor gemäß dem Oberbegriff von Anspruch 1.

Sensoren in Industrieanlagen sind häufig schwierigen Umweltbedingungen wie Schmutz, Hitze und/oder Vibrationen ausgesetzt. Diese Einflüsse bewirken mit der Zeit eine Verschmutzung, eine Alterung und/oder einen Defekt des Sensors. Eine Detektionsgüte der Sensoren nimmt mehr oder weniger schnell ab. Im Extremfall mündet die Abnahme der Detektionsgüte in einem Teilausfall oder Ausfall einer Anlage, in der der Sensor eingesetzt ist.

Um einen Ausfall der Anlage zu vermeiden, werden häufig feste Wartungszyklen geplant, in denen der Zustand der Sensoren überprüft wird oder die Sensoren prophylaktisch ausgetauscht werden.

Um das zu vermeiden und die momentane Detektionsgüte von Sensoren zu überwachen, lassen sich Kennzahlen wie ,Quality of Run' oder ,Qualitiy of Teach' vom Sensor abfragen. Dabei wird meist die Höhe des Eingangssignals ausgewertet und ggf. mit Werten der Vergangenheit verglichen.

Die US 2016 0182285 A1 offenbart verbesserte Kommunikationsprotokolle, welche die Zuverlässigkeit und Effizienz der Datenübertragung zwischen einem Hostgerät und einem oder mehreren Feldgeräten in einem industriellen Prozessnetzwerk verbessern. Ein Feldgerät kann eine Gerätebeschreibung speichern, die mehrere Parameter enthält, die Funktionsattribute des Feldgeräts beschreiben. Ein Host-Gerät kann die Gerätebeschreibung zur Verwendung bei der Kommunikation mit dem Feldgerät hochladen. Das Feldgerät kann ferner mehrere speicherbare Konfigurationen speichern, wobei jede speicherbare Konfiguration eine gesamte Konfiguration des Feldgeräts darstellt. Das Host-Gerät kann mehrere speicherbare Konfigurationen vom Feldgerät hochladen, um beispielsweise die speicherbaren Konfigurationen auf ein zweites Feldgerät im selben oder einem anderen Netzwerk zu übertragen. Das Host-Gerät kann eine Konfigurationsaktivierungsanforderung senden, um zu bewirken, dass ein Feldgerät gemäß den Konfigurationsdaten arbeitet, die in einer ausgewählten der mehreren speicherbaren Konfigurationen enthalten sind.

Die DE 10 2008 038 417 A1 betrifft ein Verfahren zum Übertragen von gerätespezifischen Daten zwischen einem Feldgerät der Automatisierungstechnik und einer Steuereinheit, wobei das Feldgerät und die Steuereinheit über mindestens ein Bussystem miteinander kommunizieren, wobei dem Feldgerät mehrere räumlich voneinander getrennt angeordnete Datenspeicher zugeordnet sind, in denen die gerätespezifischen Daten abgelegt sind. Die gerätespezifischen Daten der getrennt angeordneten Datenspeicher werden gesammelt und in einem Haupt-Datenspeicher gespeichert, so dass sich in dem Haupt-Datenspeicher ein Abbild bzw. eine Sicherungskopie aller gerätespezifischen Daten des Feldgeräts befindet. Das Abbild bzw. die Sicherungskopie wird anschließend zwischen dem Feldgerät und der Steuereinheit ausgetauscht.

Die DE 10 2010 029 952 A1 betrifft ein Verfahren zum Integrieren von zumindest einem Feldgerät in ein Netzwerk der Automatisierungstechnik, bestehend aus mehreren in einer Automatisierungsanlage verteilt angeordneten Feldgeräten, die über zumindest einen Datenbus, auf dem ein Busprotokoll läuft, miteinander verbunden sind, wobei der Zugriff auf die Feldgeräte über eine Feldzugriffseinheit erfolgt, die mit zumindest einer Automatisierungs-/lntegrations-Plattform und zumindest einem WebServer eines Service Providers kommuniziert, wobei von dem Service Provider für jedes Feldgerät ein virtuelles Abbild des Feldgeräts in einer Datenbank bereitgestellt wird, wobei das virtuelle Abbild das in die Automatisierungsanlage zu integrierende Feldgerät umfänglich bezüglich seiner feldgerätespezifischen und applikationsspezifischen Eigenschaften in der Automatisierungsanlage beschreibt, wobei der Service Provider dem Betreiber der Automatisierungsanlage über Cloud-Computing WebServices bzw. Internet basierte Dienste, automatisch oder auf Anfrage das virtuelle Abbild des Feldgeräts mit den konkreten feldgeräte- und applikationsspezifischen Eigenschaften zur Laufzeit übermittelt und bevorzugt unmittelbar in das Feldgerät überträgt, und wobei das Feldgerät seine Funktion in der Automatisierungsanlage ausführt, sobald es in das Netzwerk integriert wird.

Die DE 10 2017 104 912 A1 umfasst ein Verfahren zum Parametrieren eines Feldgeräts der Automatisierungstechnik, welches mit einem Server über ein erstes Kommunikationsnetzwerk in Kommunikationsverbindung steht, umfassend: Initiieren des Verfahrens durch Übermitteln eines Befehls zum Parametrieren oder zum Vornehmen von Änderungen der Parameterwerte des Feldgeräts an den Server; Übermitteln einer Identifikationsinformation des Feldgeräts an den Server; Ermitteln eines auf dem Server gespeicherten digitalen Abbilds des Feldgeräts anhand der übermittelten Identifikationsinformation, welches digitale Abbild Informationen über das Feldgerät, insbesondere Konfigurationseinstellungen des Feldgeräts, sowie messstellenrelevante Informationen, enthält, sowie derart ausgestaltet ist, das Verhalten des Feldgeräts simuliert, bzw. emuliert, wiederzugeben; Erstellen und Vorschlagen zumindest eines Parametersatzes für das Feldgerät anhand der auf dem Server enthaltenen Informationen über das Feldgerät mittels einer auf dem Server ausgeführten Anwendungsapplikation; Auswahl und Bestätigen des vorgeschlagenen Parametersatzes durch einen Bediener; und Übermitteln des bestätigten Parametersatzes an das Feldgerät und Parametrieren des Feldgeräts mittels des übermittelten Parametersatzes.

Eine Aufgabe der Erfindung besteht darin, für Sensoren eine aktuelle Detektionsgüte zu überwachen, eine Voraussage über eine zukünftige Detektionsgüte zu treffen und/oder Hinweise auf eine Hauptursache für den Verlust einer Detektionsgüte anzugeben.

Die Aufgabe wird gemäß Anspruch 1 gelöst durch ein System mit einem Sensor, wobei der Sensor ein Sensorgehäuse aufweist mit mindestens einer Elektronik, mit mindestens einer Steuer-und Auswerteeinheit und mindestens einem primären Sensorelement und mindestens mechanischen Komponenten, wobei der Sensor mindestens ein zusätzliches sekundäres Sensorelement zur Erfassung von Umgebungseinflüssen aufweist, wobei zugehörig zu dem Sensor ein digitaler Zwillingsensor vorhanden ist, wobei der digitale Zwillingsensor in einer Datenbank gespeichert ist, wobei der digitale Zwillingssensor ein Datenmodell des Sensors bildet, wobei der Sensor und der digitale Zwilling über eine Schnittstelle miteinander verbunden sind, wobei über die Schnittstelle mindestens Daten von dem Sensor an den digitalen Zwillingssensor übertragbar sind.

Das mindestens eine sekundäre Sensorelement misst Umgebungsparameter. Zusätzlich können in einem Speicher des Sensors interne Kennzahlen wie z. B. eine Stromaufnahme, angelegte Spannungen und/oder Eingangssignale aufgenommen werden. Zum Zeitpunkt der Sensorproduktion wird nicht nur der physikalische Sensor produziert, sondern auch der digitale Zwillingssensor. Der digitale Zwillingssensor ist ein Datenmodell bzw. ein Simulationsmodell des realen Sensors. Der digitale Zwillingssensor erhält mindestens alle produktionsspezifischen Informationen wie genaue Abgleich- und Justagewerte.

Auf diese Weise wird sichergestellt, dass der digitale Zwillingssensor ein möglichst genaues Modell des produzierten Sensors ist.

Abweichungen zwischen dem digitalen Zwillingsensor und dem realen Sensor können in dem realen Sensor oder in dem digitalen Zwillingssensor dadurch festgestellt werden, dass ein Vergleich zwischen dem realen Sensor und dem digitalen Zwillingssensor über Schnittstelle durchgeführt wird.

Bei der Schnittstelle kann es sich beispielsweise um eine Ethernet-Schnittstelle bzw. eine Ethernet-Verbindung handeln. Jedoch sind auch andere Schnittstellen möglich. Beispielsweise kann es sich bei der Schnittstelle um ein Bussystem handeln. Optional ist die Schnittstelle als sichere, insbesondere fehlersichere Schnittstelle ausgebildet. Insbesondere kann es sich auch um ein sicheres Bussystem handeln. Bei der Schnittstelle kann es sich auch um eine Funkschnittstelle handeln. Bei der Schnittstelle handelt es sich um eine Ferndatenschnittstelle, da der Sensor und der digitale Zwillingssensor räumlich getrennt voneinander sind. So ist die Datenbank mit dem digitalen Zwillingssensor meist in einem vom Sensor entfernten Rechenzentrum abgelegt.

Gemäß der Erfindung ist eine Software der Datenbank ausgebildet eine Simulation des digitalen Zwillings durchzuführen, und die durch die Software durchgeführte Simulation eine Güte der Detektionsfunktion simuliert und mit der Güte der Detektionsfunktion des Sensors vergleicht.

Dabei wird eine Sensorstimulation simuliert und eine Höhe eines resultierenden Eingangssignals simuliert und mit Werten von berechneten Eingangssignalen der Vergangenheit verglichen. Ist das Eingangssignal unterhalb einer bestimmten vordefinierten Schwelle so wird eine verminderte Detektionsgüte gemeldet.

Beim Einbau und im Betrieb liefert der reale Sensor über eine sichere Datenleitung beispielsweise folgende Daten an den digitalen Zwillingssensor:
- Aktuelle Parametrierungen, wie eingestellte Schaltpunkte,
- Interne Kennzahlen wie Stromaufnahme, Eingangssignale und/oder Ausgangsströme,
- Umgebungsbedingungen.

Mit diesen Daten, dem Wissen über das Sensordesign, den Sensoraufbau bzw. die Sensorkonstruktion und Herstellerangaben über die eingesetzten Komponenten können kritische und unkritische Komponenten im Sensorsystem identifiziert werden, indem die Auswirkungen der Einsatzbedingungen auf die kritischsten Systemkomponenten im digitalen Zwillingssensor simuliert werden.

In Weiterbildung der Erfindung berücksichtigt und simuliert die Simulation mindestens eine Alterung des Sensors.

Dabei werden mindestens Herstellerangaben über die eingesetzten Komponenten des Sensors zu Grunde gelegt. Aufgrund von beispielsweise Datenblattangaben über verwendete Komponenten bzw. Materialien und Datenbankwerten zur Änderung von Parametern der Komponenten bzw. Materialien aufgrund von Alterung kann die Alterung des Sensors in bestimmten Zeitintervallen simuliert werden. So kann eine Alterung beispielsweisen in Wochen, Monaten oder Jahren simuliert werden.

In Weiterbildung der Erfindung ist ein Ergebnis der Simulation mindestens eine Identifikation einer schwächsten Komponente des Sensors.

Dabei werden Herstellerangaben über die eingesetzten Komponenten des Sensors zu Grunde gelegt. Aufgrund von beispielsweise Datenblattangaben über verwendete Komponenten bzw. Materialien und Datenbankwerten zur Änderung von Parametern der Komponenten bzw. Materialien beispielsweise aufgrund von Umgebungsbedingungen kann eine besondere Schwächung einzelner Komponenten des Sensors simuliert werden. Sind die Komponenten beispielsweise Teil eines kritischen Pfades des Sensors und ist die Schwächung der Komponente am höchsten im Vergleich zu anderen Komponenten, so ist wird diese Komponente als schwächste Komponente identifiziert und gespeichert.

In Weiterbildung der Erfindung ist ein Ergebnis der Simulation mindestens eine Zeit bis zum Ausfall der schwächsten Komponente des Sensors.

Dabei werden Herstellerangaben über die eingesetzten Komponenten des Sensors zu Grunde gelegt. Aufgrund von beispielsweise Datenblattangaben über verwendete Komponenten bzw. Materialien und Datenbankwerten zur Änderung von Parametern der Komponenten bzw. Materialien beispielsweise aufgrund von Umgebungsbedingungen kann eine Schwächung einzelner Komponenten des Sensors simuliert werden. Dabei wird ein zeitlicher Verlauf der Schwächung ermittelt, wodurch eine Zeit bis zu einem Ausfall der Komponente ermittelt werden kann.

In Weiterbildung der Erfindung ist ein Ergebnis der Simulation mindestens eine Identifikation eines Wertes mindestens eines sekundären Sensorelements, welcher mit dem Ausfall einer Komponente korreliert.

Dabei werden ebenfalls beispielsweise Herstellerangaben über die eingesetzten Komponenten des Sensors zu Grunde gelegt. Aufgrund von beispielsweise Datenblattangaben über verwendete Komponenten bzw. Materialien und Datenbankwerten zur Änderung von Parametern der Komponenten bzw. Materialien beispielsweise aufgrund von Umgebungsbedingungen kann eine Schwächung einzelner Komponenten des Sensors simuliert werden. Dabei werden erfasste Umgebungsbedingungen eines bestimmten sekundären Sensorelements identifiziert, welche mit einem Ausfall der Komponenten korreliert. Beispielsweise können erhöhte mechanische Belastungen, die auf den Sensor wirken, korreliert werden mit einer Veränderung von optischen Sensoreigenschaften aufgrund von auftretenden Spannungen von Optiken oder auch Beschädigungen von optischen Teilen.

In Weiterbildung der Erfindung sind die sekundären Sensorelemente Temperatursensoren, Lagesensoren, Drucksensoren und/oder Beschleunigungssensoren.

Temparatursensoren erfassen beispielsweise die Umgebungstemperatur, die Innentemperatur und/oder die Kerntemperatur einzelner Sensorkomponenten. Dadurch kann ein Temperaturmodell des Sensors gebildet werden sowie hohe Temperaturunterschiede, Temperaturspitzen und Temperatursenken identifiziert werden.

Lagesensoren erfassen die Lage des Sensors im Raum sowie eine Veränderung der Lage im Raum. So kann beispielsweise eine lose Befestigung des Sensors einfach dadurch erkannt werden, dass sich die Lage des Sensors über einen Zeitraum ändert.

Beschleunigungssensoren erfassen eine Bewegung bzw. eine Bewegungsänderung im Raum. So kann beispielsweise eine mechanische Belastung, wie beispielsweise Vibrationen oder Schwingungen im Sensor identifiziert werden. Treten beispielsweise Resonanzen auf, kann eine erhöhte Gefahr eine Beschädigung des Sensors bestehen und identifiziert werden.

Drucksensoren erfassen einen Druck auf Sensorkomponenten oder auch eine Druckänderung auf Sensorkomponenten. So können beispielsweise Druckänderungen in der chemischen Prozessindustrie, welche direkt auf den Sensor oder das Sensorgehäuse wirken, erfasst werden und untypische Druckänderungen oder Druckbelastungen identifiziert werden. Beispielsweise können auch Dehnungssensoren als sekundäre Sensorelemente eingesetzt werden.

In Weiterbildung der Erfindung beinhaltet das Datenmodell mindestens produktionsspezifische Informationen des Sensors nämlich Abgleichwerte und/oder Justagewerte.

Diese Werte sind meist individuell für jeden einzelnen produzierten Sensor. Eine Veränderung der Abgleichwerte und/oder Justagewerte wird überwacht und eine Veränderung kann das Sensorvermögen direkt negativ beeinträchtigen.

In Weiterbildung der Erfindung weisen der Sensor und der digitale Zwillingssensor jeweils eine eindeutige Identifikationsnummer auf, welche miteinander verknüpft sind, um den digitalen Zwillingsensor dem Sensor und/oder den Sensor dem digitalen Zwillingssensor eindeutig zuzuordnen.

Beiden Sensoren, dem realen Sensor und dem virtuellen digitalen Zwillingssensor werden eindeutige Identifikationsnummern vergeben, um den Sensor und sein Modell sicher zu verbinden.

Dadurch kann eine Vielzahl von Sensoren unterschieden werden. Dadurch kann auch eine Statistik für jeden Sensor geführt werden und eine Häufung von Fehlerursachen identifiziert werden.

Ändern sich beispielsweise für ein größere Anzahl von Sensoren in einem bestimmten örtlich eingrenzbaren Bereich einer Produktionsanlage die optischen Empfangswerte so kann eine veränderte Beleuchtungssituation in diesem Bereich identifiziert werden, die beispielsweise eine drohende negative Auswirkung auf das Sensordetektionsverhalten haben. Davon ausgehend können Warnmeldungen oder sogar Hinweise zur Beseitigung der konkreten Störung ausgegeben werden.

In Weiterbildung der Erfindung werden während einer Betriebsphase des Sensors die Daten des Sensors kontinuierlich oder in festen Intervallen an den digitalen Zwillingssensor übertragen.

Nach einer Neuinstallation können die Daten beispielsweise kontinuierlich zwischen Sensor und digitalem Zwillingsensor übertragen werden, da der Sensor in dieser Zeit erstmals Umgebungsbedingungen ausgesetzt ist und eine Beeinflussung des Sensors mit einer hohen Wahrscheinlichkeit eintritt.

Im laufenden Betrieb und je nach Sensor bzw. je nach Einsatzort kann eine Übertragung in festen Intervallen mit verschiedenen Abständen von z. B. Sekunden, Minuten, Stunden, Tagen, Wochen, Monaten oder Jahren erfolgen.

Je drastischer und/oder häufiger die Veränderungen von Umgebungsbedingungen ist, desto häufiger kann eine zyklische Übertragung von Daten erfolgen.

In Weiterbildung der Erfindung sind die Daten Parametrierdaten und/oder Kennzahlen des Sensors und/oder Sekundärsensordaten der sekundären Sensorelemente.

In Weiterbildung der Erfindung weist das Datenmodell Konstruktionsdaten, Funktionsdaten und/oder Designdaten des Sensors auf.

In Weiterbildung der Erfindung ist die Datenbank ausgebildet ein Simulationsergebnis einem Mensch-Maschinen-Interface zu senden.

Dadurch können die Simulationsergebnisse beispielsweise an einer Überwachungswarte, einer Fernwarte oder auch direkt an dem Sensor angezeigt werden. Bei der Anzeige kann es sich um eine visuelle, optische, graphische, textliche, akustische oder ähnliche Anzeige handeln. Dabei können beispielsweise Push-Nachrichten oder ähnliches versendet und angezeigt werden.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:

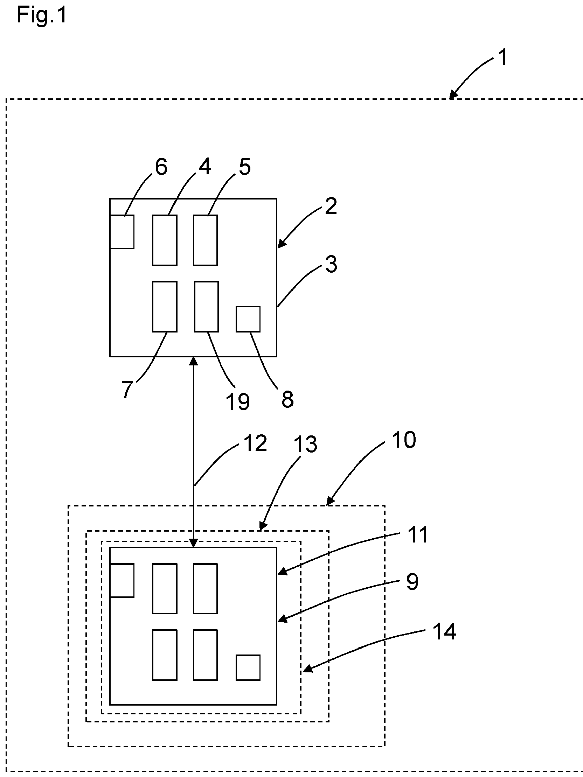

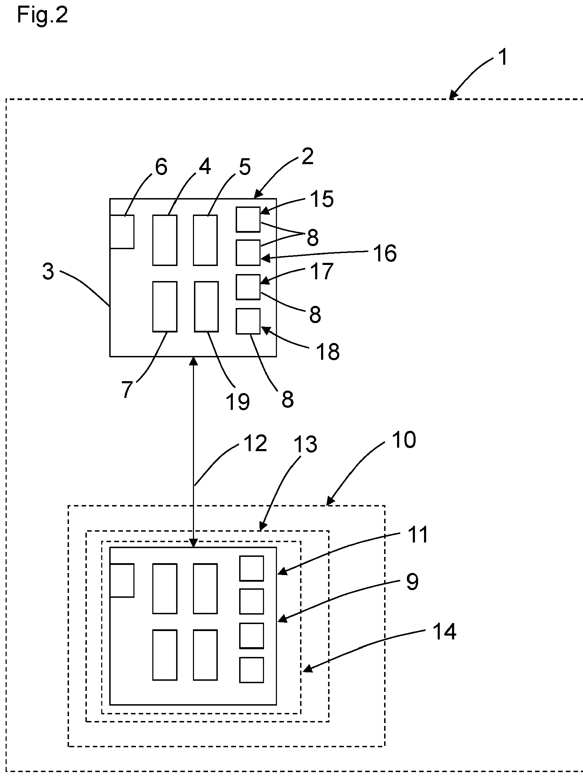

Figur 1 und Figur 2 jeweils ein erfindungsgemäßes System mit einem Sensor.

In den nachfolgenden Figuren sind identische Teile mit identischen Bezugszeichen versehen.

Figur 1 zeigt ein System 1 mit einem Sensor 2, wobei der Sensor 2 ein Sensorgehäuse 3 aufweist mit mindestens einer Elektronik 4, mit mindestens einer Steuer-und Auswerteeinheit 5 und mindestens einem primären Sensorelement 6 und mindestens mechanischen Komponenten 7, wobei der Sensor 2 mindestens ein zusätzliches sekundäres Sensorelement 8 zur Erfassung von Umgebungseinflüssen aufweist, wobei zugehörig zu dem Sensor 2 ein digitaler Zwillingsensor 9 vorhanden ist, wobei der digitale Zwillingsensor 9 in einer Datenbank 10 gespeichert ist, wobei der digitale Zwillingssensor 9 ein Datenmodell 11 des Sensors 2 bildet, wobei der Sensor 2 und der digitale Zwillingsensor 9 über eine Schnittstelle 12 miteinander verbunden sind, wobei über die Schnittstelle 12 mindestens Daten von dem Sensor 2 an den digitalen Zwillingssensor 9 übertragbar sind.

Das mindestens eine sekundäre Sensorelement 8 misst Umgebungsparameter. Zusätzlich können in einem Speicher 19 des Sensors interne Kennzahlen wie z. B. eine Stromaufnahme, angelegte Spannungen und/oder Eingangssignale aufgenommen werden.

Zum Zeitpunkt der Sensorproduktion wird nicht nur der physikalische Sensor 2 produziert, sondern auch der digitale Zwillingssensor 9 erstellt. Dieser erhält alle produktionsspezifischen Informationen wie genaue Abgleich- und Justagewerte.

Abweichungen zwischen dem digitalen Zwillingsensor 9 und dem realen Sensor 2 können in dem realen Sensor 2 oder in dem digitalen Zwillingssensor 9 dadurch festgestellt werden, dass ein Vergleich zwischen dem realen Sensor 2 und dem digitalen Zwillingssensor 9 über Schnittstelle durchgeführt wird.

Als Beispiel dient ein System 1 mit einem Sensor 2 mit vier während der Entwicklung identifzierten kritischen Bauteilen.

Ein erstes kritisches Bauteil ist ein Elektrolytkondensator. Die Ausfallwahrscheinlichkeit ist hauptsächlich von den fließenden Strömen mit Ripples, der Einsatztemperatur und der Topologie in der Schaltung abhängig.

Ein zweites kritisches Bauteil ist ein Schaltrelais. Die Ausfallwahrscheinlichkeit ist hauptsächlich von der maximalen Anzahl an Schaltzyklen und der Einsatztemperatur abhängig.

Ein drittes kritisches Bauteil ist eine Leuchtdiode. Abhängig von einem Pulsstrom und einer Umgebungstemperatur nimmt die Ausgangsleistung der LED ab. Unterschreitet diese ein Minimum, kann der Sensor nicht mehr wie spezifiziert betrieben werden, was als Ausfall gewertet wird.

Ein viertes kritisches Bauteil ist eine Kunststoffverstemmung. Abhängig von Temperatur, Beschleunigung und anliegenden Scherkräften kann die Kunststoffverstemmung fließen oder brechen. Auch dies kann zu einer Verletzung der Sensorsystemspezifikation also zu einem Ausfall oder zu Alterungserscheinungen führen.

Die Lage des Kondensators in der Schaltung und die spezifische Wärmeentwicklung an diesem Ort sind aus dem Sensorsystemdesign bekannt. Die Einsatztemperatur wird während des Einsatzes erfasst. Mit Hilfe von Herstellerangaben, wie beispielsweise Datenblättern, kann die voraussichtlich verbleibende Lebensdauer des Kondensators in den spezifischen Einsatzbedingungen bestimmt werden. Auch eine Änderung der Kapazität oder der Impedanz, welche aufgrund einer Alterung auftritt, kann so aufgrund der Herstellerangaben simuliert werden.

Die Anzahl an Schaltzustandswechseln, die das Relais in einem bestimmten Zeitraum durchführt, kann über einen Zähler erfasst und an den digitalen Zwillingssensor übermittelt werden. Neben der Einsatztemperatur ist auch beim Relais die spezifische Einsatztemperatur durch die im Sensorsystemdesign festgelegte Topologie bekannt.

Auch hier kann mit Herstellerangaben die voraussichtlich verbleibende Lebensdauer des Relais extrapoliert werden, indem die verbleibenden Schaltzustandswechsel, die das Relais laut Hersteller noch liefern kann, mit der Anzahl der Schaltzyklen in der Vergangenheit verglichen werden.

Die spezifische Einsatztemperatur der Leuchtdiode wird erfasst. Zusätzlich ist der Verlauf der Reduktion ihrer Ausgangsleistung abhängig von der Temperatur und dem Pulsstrom, welche während der Bauteilqualifikation gemessen worden sind. Mit diesen Qualifikationsdaten, der spezifischen Einsatztemperatur der Leuchtdiode und der bekannten Pulsströme kann somit der Zeitpunkt bestimmt werden, an dem die Leuchtdiode die notwendige Ausgangsleistung unterschreitet und somit die Sensorsystemspezifikation.

Nimmt das Eingangssignal signifikant stärker ab, als es die Simulation der LED-Alterung voraussagt, ist dies ein Hinweis darauf, dass das System starke Verschmutzungen aufweist und entsprechend gereinigt werden muss. Sprünge in den Statistiken über die Eingangssignale der Vergangenheit liefern dem digitalen Zwilling einen Hinweis darauf, dass eine Reinigung erfolgt ist.

Aus den gemessenen Beschleunigungen und den bekannten Massen der Systemkomponenten können die Scherkräfte, die auf die Verstemmung wirken, simuliert bzw. berechnet werden. Die spezifische Temperatur an der Verstemmung wird ermittelt. Mit diesen Daten kann ein Kriechen des Kunststoffes aufgrund von Alterung oder der voraussichtliche Zeitpunkt eines Bruches abgeschätzt werden.

Kommt der Sensor 2 in einem Umfeld zum Einsatz, in dem es eher selten schaltet, jedoch beispielsweise starken Vibrationen und hohen Temperaturen ausgesetzt ist, kann ein Ergebnis der Simulation sein, dass im Sensor 2 die Kunststoffverstemmung oder die Leuchtdiode früher als das Relais ausfallen und somit den Zeitpunkt des notwendigen Sensortauschs bestimmen. Zusätzlich dazu können Hinweise gegeben werden, dass die Reduktion von Temperatur oder Vibrationen die Lebensdauer des Systems positiv beeinflussen würden.

In einem anderen Anwendungsumfeld bzw. Applikationsumfeld mit geringen Vibrationen, hohen Ausgangsströmen und wenigen Schaltzyklen wird die Lebensdauer eher vom Elektrolytkondensator abhängen. Auch hier ist bekannt, dass der hohe Ausgangsstrom des Systems maßgeblich die Lebensdauer des Sensors 2 bestimmt.

Bis zum frühesten Ausfallzeitpunkt einer kritischen Sensorkomponente, ist das Ende des Sensorlebenszyklus noch nicht erreicht. Die Dauer des Lebenszyklus kann also speziell auf die Einsatzbedingungen angepasst werden und nicht, wie nach dem Stand der Technik üblich, an den schlechtesten Einsatzbedingungen orientiert werden.

Die spezifische Dauer des Lebenszyklus kann also länger zugesichert werden, was Ressourcen spart und Risiken beim Einsatz über die heute spezifizierte Lebensdauer hinaus minimieren kann.

Gemäß Figur 1 ist eine Software 13 der Datenbank 10 ausgebildet eine Simulation des digitalen Zwillingssensors 9 durchzuführen, und die durch die Software13 durchgeführte Simulation eine Güte der Detektionsfunktion simuliert und mit der Güte der Detektionsfunktion des Sensors 2 vergleicht.

Dabei wird eine Sensorstimulation simuliert und eine Höhe eines resultierenden Eingangssignals simuliert und mit Werten von berechneten Eingangssignalen der Vergangenheit verglichen. Ist das Eingangssignal unterhalb einer bestimmten vordefinierten Schwelle so wird eine verminderte Detektionsgüte gemeldet.

Beim Einbau und im Betrieb liefert der reale Sensor 2 über eine sichere Datenleitung beispielsweise folgende Daten an den digitalen Zwillingssensor:
- Aktuelle Parametrierungen, wie eingestellte Schaltpunkte,
- Interne Kennzahlen wie Stromaufnahme, Eingangssignale und/oder Ausgangsströme,
- Umgebungsbedingungen.

Mit diesen Daten, dem Wissen über das Sensordesign, den Sensoraufbau bzw. die Sensorkonstruktion und Herstellerangaben über die eingesetzten Komponenten können kritische und unkritische Komponenten im Sensor 2 identifiziert werden, indem die Auswirkungen der Einsatzbedingungen auf die kritischsten Sensorkomponenten im digitalen Zwillingssensor 9 simuliert werden.

Gemäß Figur 1 berücksichtigt und simuliert die Simulation 14 mindestens eine Alterung des Sensors 2.

Dabei werden Herstellerangaben über die eingesetzten Komponenten des Sensors 2 zu Grunde gelegt. Aufgrund von beispielsweise Datenblattangaben über verwendete Komponenten bzw. Materialien und Datenbankwerten zur Änderung von Parametern der Komponenten bzw. Materialien aufgrund von Alterung kann die Alterung des Sensors 2 in bestimmten Zeitintervallen simuliert werden. So kann eine Alterung beispielsweisen in Wochen, Monaten oder Jahren simuliert werden.

Gemäß Figur 1 ist ein Ergebnis der Simulation 14 mindestens eine Identifikation einer schwächsten Komponente des Sensors 2.

Dabei werden Herstellerangaben über die eingesetzten Komponenten des Sensors 2 zu Grunde gelegt. Aufgrund von beispielsweise Datenblattangaben über verwendete Komponenten bzw. Materialien und Datenbankwerten zur Änderung von Parametern der Komponenten bzw. Materialien beispielsweise aufgrund von Umgebungsbedingungen kann eine besondere Schwächung einzelner Komponenten des Sensors 2 simuliert werden. Sind die Komponenten beispielsweise Teil eines kritischen Pfades des Sensors 2 und ist die Schwächung der Komponente am höchsten im Vergleich zu anderen Komponenten, so wird diese Komponente als schwächste Komponente identifiziert und gespeichert.

Gemäß Figur 1 ist ein Ergebnis der Simulation 14 mindestens eine Zeit bis zum Ausfall der schwächsten Komponente des Sensors 2.

Dabei werden Herstellerangaben über die eingesetzten Komponenten des Sensors 2 zu Grunde gelegt. Aufgrund von beispielsweise Datenblattangaben über verwendete Komponenten bzw. Materialien und Datenbankwerten zur Änderung von Parametern der Komponenten bzw. Materialien beispielsweise aufgrund von Umgebungsbedingungen kann eine Schwächung einzelner Komponenten des Sensors 2 simuliert werden. Dabei wird ein zeitlicher Verlauf der Schwächung ermittelt, wodurch eine Zeit bis zu einem Ausfall der Komponente ermittelt werden kann.

Gemäß Figur 1 ist ein Ergebnis der Simulation 14 mindestens eine Identifikation eines Wertes mindestens eines sekundären Sensorelements, welcher mit dem Ausfall einer Komponente korreliert.

Dabei werden ebenfalls beispielsweise Herstellerangaben über die eingesetzten Komponenten des Sensors 2 zu Grunde gelegt. Aufgrund von beispielsweise Datenblattangaben über verwendete Komponenten bzw. Materialien und Datenbankwerten zur Änderung von Parametern der Komponenten bzw. Materialien beispielsweise aufgrund von Umgebungsbedingungen kann eine Schwächung einzelner Komponenten des Sensors simuliert werden. Dabei werden erfasste Umgebungsbedingungen eines bestimmten sekundären Sensorelements identifiziert, welche mit einem Ausfall der Komponenten korreliert. Beispielsweise können erhöhte mechanische Belastungen die auf den Sensor 2 wirken korreliert werden mit einer Veränderung von optischen Sensoreigenschaften aufgrund von auftretenden Spannungen von Optiken oder auch Beschädigungen von optischen Teilen.

Gemäß Figur 2 sind die sekundären Sensorelemente 8 Temperatursensoren 15, Lagesensoren 16, Drucksensoren 17 und/oder Beschleunigungssensoren 18.

Gemäß Figur 1 beinhaltet das Datenmodell 11 mindestens produktionsspezifische Informationen des Sensors nämlich Abgleichwerte und/oder Justagewerte.

Diese Werte sind meist individuell für jeden einzelnen produzierten Sensor 2. Eine Veränderung der Abgleichwerte und/oder Justagewerte wird überwacht und eine Veränderung kann das Sensorvermögen direkt negativ beeinträchtigen.

Gemäß Figur 1 weisen der Sensor 1 und der digitale Zwillingssensor jeweils eine eindeutige Identifikationsnummer auf, welche miteinander verknüpft sind, um den digitalen Zwillingsensor 9 dem Sensor 2 und/oder den Sensor 2 dem digitalen Zwillingssensor 9 eindeutig zuzuordnen.

Gemäß Figur 1 werden während einer Betriebsphase des Sensors 2 die Daten des Sensors 2 kontinuierlich oder in festen Intervallen an den digitalen Zwillingssensor 9 übertragen.

Gemäß Figur 1 sind die Daten Parametrierdaten und/oder Kennzahlen des Sensors 2 und/oder Sekundärsensordaten der sekundären Sensorelemente 8.

Gemäß Figur 1 weist das Datenmodell Konstruktionsdaten, Funktionsdaten und/oder Designdaten des Sensors 2 auf.

Gemäß Figur 1 ist die Datenbank 10 oder der Sensor 2 ausgebildet ein Simulationsergebnis einem Mensch-Maschinen-Interface zu senden.

### Bezugszeichen:

- 1: System
- 2: Sensor
- 3: Sensorgehäuse
- 4: Elektronik
- 5: Steuer- und Auswerteeinheit
- 6: primäres Sensorelement
- 7: mechanische Komponenten
- 8: sekundäres Sensorelement
- 9: digitaler Zwillingssensor
- 10: Datenbank
- 11: Datenmodell
- 12: Schnittstelle
- 13: Software
- 14: Simulation
- 15: Temperatursensor
- 16: Lagesensor
- 17: Drucksensor
- 18: Beschleunigungssensor
- 19: Speicher

## Patentansprüche

1. System (1) mit einem Sensor (2), wobei der Sensor (2) ein Sensorgehäuse (3) aufweist mit mindestens einer Elektronik (4), mit mindestens einer Steuer- und Auswerteeinheit (5) und mindestens einem primären Sensorelement (6) und mindestens mechanischen Komponenten (7) und wobei das System weiterhin einen digitalen Zwillingssensor (9) und feine Datenbank (10) und ein Datenmodell (11) des Sensors (2) und Software (13) der Datenbank (10) aufweist,
wobei der Sensor (2) mindestens ein zusätzliches sekundäres Sensorelement (8) zur Erfassung von Umgebungseinflüssen aufweist,
wobei zugehörig zu dem Sensor (2) der digitaler Zwillingsensor (9) vorhanden ist,
wobei der digitale Zwillingsensor (9) in der Datenbank (10) gespeichert ist, wobei der digitale Zwillingssensor (9) das Datenmodell (11) des Sensors (2) bildet,
**dadurch gekennzeichnet, dass**
der Sensor (2) und der digitale Zwillingssensor (9) über eine Schnittstelle (12) miteinander verbunden sind, wobei über die Schnittstelle (12) mindestens Daten von dem Sensor (2) an den digitalen Zwillingssensor (9) übertragbar sind, wobei die Software (13) der Datenbank (10) ausgebildet ist eine Simulation (14) des digitalen Zwillingssensors (9) durchzuführen, und die durch die Software (13) durchgeführte Simulation (14) eine Güte der Detektionsfunktion simuliert und mit der Güte der Detektionsfunktion des Sensors (2) vergleicht.

2. System (1) nach Anspruch 1, **dadurch gekennzeichnet, dass** die Simulation (14) mindestens eine Alterung des Sensors (2) berücksichtigt und simuliert.

3. System (1) nach mindestens einem der Ansprüche 1 bis 2, **dadurch gekennzeichnet, dass** ein Ergebnis der Simulation (14) mindestens eine Identifikation einer schwächsten Komponente des Sensors (2) ist.

4. System (1) nach mindestens einem der Ansprüche 1 bis 3, **dadurch gekennzeichnet, dass** ein Ergebnis der Simulation (14) mindestens eine Zeit bis zum Ausfall der schwächsten Komponente des Sensors (2) ist.

5. System (1) nach mindestens einem der Ansprüche 1 bis 4, **dadurch gekennzeichnet, dass** ein Ergebnis der Simulation (14) mindestens eine Identifikation eines Wertes mindestens eines sekundären Sensorelements (8) ist, welches mit dem Ausfall einer Komponente korreliert.

6. System (1) nach mindestens einem der vorhergehenden Ansprüche, **dadurch gekennzeichnet, dass** die sekundären Sensorelemente (8) Temperatursensoren (15), Lagesensoren (16), Drucksensoren (17) und/oder Beschleunigungssensoren (18) sind.

7. System (1) nach mindestens einem der vorhergehenden Ansprüche, **dadurch gekennzeichnet, dass** das Datenmodell (11) mindestens produktionsspezifische Informationen des Sensors (2) nämlich Abgleichwerte und/oder Justagewerte beinhaltet.

8. System (1) nach mindestens einem der vorhergehenden Ansprüche, **dadurch gekennzeichnet, dass** der Sensor (2) und der digitale Zwillingssensor (9) jeweils eine eindeutige Identifikationsnummer aufweisen, welche miteinander verknüpft sind, um den digitalen Zwillingsensor (9) dem Sensor (2) und/oder den Sensor (2) dem digitalen Zwillingssensor (9) eindeutig zuzuordnen.

9. System (1) nach mindestens einem der vorhergehenden Ansprüche, **dadurch gekennzeichnet, dass** während einer Betriebsphase des Sensors (2) die Daten des Sensors (2) kontinuierlich oder in festen Intervallen an den digitalen Zwillingssensor (9) übertragen werden.

10. System (1) nach mindestens einem der vorhergehenden Ansprüche, **dadurch gekennzeichnet, dass** die Daten Parametrierdaten und/oder Kennzahlen des Sensors (2) und/oder Sekundärsensordaten der sekundären Sensorelemente (8) sind.

11. System (1) nach mindestens einem der vorhergehenden Ansprüche, **dadurch gekennzeichnet, dass** das Datenmodell (11) Konstruktionsdaten, Funktionsdaten und/oder Designdaten des Sensors (2) aufweist.

12. System (1) nach mindestens einem der vorhergehenden Ansprüche, **dadurch gekennzeichnet, dass** die Datenbank (10) dazu ausgebildet ist ein Simulationsergebnis der Simulation (14) einem Mensch-Maschinen-Interface zu senden.

13. Verfahren mit einem Sensor (2), wobei der Sensor (2) ein Sensorgehäuse (3) aufweist mit mindestens einer Elektronik (4), mit mindestens einer Steuer-und Auswerteeinheit (5) und mindestens einem primären Sensorelement (6) und mindestens mechanischen Komponenten (7) , sowie mit einem digitalen Zwillingssensor (9) und einer Datenbank (10) und einem Datenmodell (11) des Sensors (2) und einer Software (13) der Datenbank (10),
wobei der Sensor (2) mindestens ein zusätzliches sekundäres Sensorelement (8) zur Erfassung von Umgebungseinflüssen aufweist,
wobei zugehörig zu dem Sensor (2) der digitale Zwillingsensor (9) vorhanden ist,
wobei der digitale Zwillingsensor (9) in der Datenbank (10) gespeichert wird, wobei der digitale Zwillingssensor (9) das Datenmodell (11) des Sensors (2) bildet,
**dadurch gekennzeichnet, dass**
der Sensor (2) und der digitale Zwillingssensor (9) über eine Schnittstelle (12) miteinander verbunden sind, wobei über die Schnittstelle (12) mindestens Daten von dem Sensor (2) an den digitalen Zwillingssensor (9) übertragen werden, wobei die Software (13) der Datenbank (10) ausgebildet ist eine Simulation (14) des digitalen Zwillingssensors (9) durchzuführen, und die durch die Software (13) durchgeführte Simulation (14) eine Güte der Detektionsfunktion simuliert und mit der Güte der Detektionsfunktion des Sensors (2) vergleicht.

## Claims

1. A system (1) having a sensor (2), wherein the sensor (2) has a sensor housing (3) having at least one electronic system (4), with at least one control and evaluation unit (5) and at least one primary sensor element (6) and at least mechanical components (7), and
wherein the system furthermore has a digital twin sensor (9), and a database (10), and a data model (11) of the sensor (2), and software (13) of the database (10);
wherein the sensor (2) has at least one additional secondary sensor element (8) for the detection of environmental influences;
wherein the digital twin sensor (9) is provided that is related to the sensor (2);
wherein the digital twin sensor (9) is stored in the database (10); and
wherein the digital twin sensor (9) forms the data model (11) of the sensor (2), **characterized in that**
the sensor (2) and the digital twin sensor (9) are connected to one another via an interface (12), with at least data from the sensor (2) being able to be transmitted to the digital twin sensor (9) via the interface (12), with the software (13) of the database (10) being configured to carry out a simulation (14) of the digital twin sensor (9), and with the simulation (14) carried out by the software (13) simulating a quality of the detection function and comparing it to the quality of the detection function of the sensor (2).

2. A system (1) in accordance with claim 1, **characterized in that** the simulation (14) considers and simulates at least an ageing of the sensor (2).

3. A system (1) in accordance with at least one of the claims 1 to 2, **characterized in that** a result of the simulation (14) is at least an identification of a weakest component of the sensor (2).

4. A system (1) in accordance with one of the claims 1 to 3, **characterized in that** a result of the simulation (14) is at least a time until failure of the weakest component of the sensor (2).

5. A system (1) in accordance with at least one of the claims 1 to 4, **characterized in that** a result of the simulation (14) is at least an identification of a parameter of at least one secondary sensor element (8) that correlates with the failure of a component.

6. A system (1) in accordance with at least one of the preceding claims, **characterized in that** the secondary sensor elements (8) are temperature sensors (15), position sensors (16), pressure sensors (17) and/or acceleration sensors (18).

7. A system (1) in accordance with at least one of the preceding claims, **characterized in that** the data model (11) comprises at least production specific pieces of information on the sensor (2), namely comparison values and/or alignment values.

8. A system (1) in accordance with at least one of the preceding claims, **characterized in that** the sensor (2) and the digital twin sensor (9) each have a unique identification number that are linked to one another in order to uniquely associate the digital twin sensor (9) with the sensor (2) and/or to uniquely associate the sensor (2) with the digital twin sensor (9).

9. A system (1) in accordance with at least one of the preceding claims, **characterized in that**, during an operating phase of the sensor (2), the data of the sensor (2) are continuously transferred or are transferred at fixed intervals to the digital twin sensor (9).

10. A system (1) in accordance with at least one of the preceding claims, **characterized in that** the data are parameterization data and/or key figures of the sensor (2) and/or secondary sensor data of the secondary sensor elements (8).

11. A system (1) in accordance with at least one of the preceding claims, **characterized in that** the data model (11) comprises construction data, functional data and/or design data of the sensor (2).

12. A system (1) in accordance with at least one of the preceding claims, **characterized in that** the database (10) is configured to transmit a simulation result of the simulation (14) to a human-machine interface.

13. A method using a sensor (2), wherein the sensor (2) has a sensor housing (3) having at least one electronic system (4), with at least one control and evaluation unit (5) and at least one primary sensor element (6) and at least mechanical components (7), and
having a digital twin sensor (9), and a database (10), and a data model (11) of the sensor (2), and software (13) of the database (10);
wherein the sensor (2) has at least one additional secondary sensor element (8) for the detection of environmental influences,
wherein the digital twin sensor (9) is provided that is related to the sensor (2);
wherein the digital twin sensor (9) is stored in the database (10), and
wherein the digital twin sensor (9) forms the data model (11) of the sensor (2),
**characterized in that**
the sensor (2) and the digital twin sensor (9) are connected to one another via an interface (12), with at least data from the sensor (2) being transmitted to the digital twin sensor (9) via the interface (12), with the software (13) of the database (10) being configured to carry out a simulation (14) of the digital twin sensor (9), and with the simulation (14) carried out by the software (13) simulating a quality of a detection function and comparing it to a quality of a detection function of the sensor (2).

## Revendications

1. Système (1) comportant un capteur (2), le capteur (2) ayant un boîtier de capteur (3) qui comprend au moins un système électronique (4), au moins une unité de commande et d'évaluation (5) et au moins un élément capteur primaire (6) et au moins des composants mécaniques (7),
le système comportant en outre un capteur jumeau numérique (9) et une base de données (10) et un modèle de données (11) du capteur (2) et un logiciel (13) de la base de données (10),
dans lequel le capteur (2) présente au moins un élément capteur secondaire supplémentaire (8) pour détecter les influences environnementales, le capteur jumeau numérique (9) est présent en association avec le capteur (2),
le capteur jumeau numérique (9) est stocké dans la base de données (10), le capteur jumeau numérique (9) forme le modèle de données (11) du capteur (2),
**caractérisé en ce que**
le capteur (2) et le capteur jumeau numérique (9) sont reliés entre eux par une interface (12), au moins les données du capteur (2) pouvant être transmises au capteur jumeau numérique (9) par l'interface (12),
le logiciel (13) de la base de données (10) est conçu pour effectuer une simulation (14) du capteur jumeau numérique (9), et la simulation (14) effectuée par le logiciel (13) simule une qualité de la fonction de détection et la compare à la qualité de la fonction de détection du capteur (2).

2. Système (1) selon la revendication 2,
**caractérisé en ce que** la simulation (14) prend en compte et simule au moins un vieillissement du capteur (2).

3. Système (1) selon l'une au moins des revendications 1 à 2, **caractérisé en ce qu'**un résultat de la simulation (14) est au moins une identification d'un composant le plus faible du capteur (2).

4. Système (1) selon l'une au moins des revendications 1 à 3, **caractérisé en ce qu'**un résultat de la simulation (14) est au moins une période temporelle allant jusqu'à la défaillance du composant le plus faible du capteur (2).

5. Système (1) selon l'une au moins des revendications 1 à 4, **caractérisé en ce qu'**un résultat de la simulation (14) est au moins une identification d'une valeur d'au moins un élément capteur secondaire (8) qui est corrélée avec la défaillance d'un composant.

6. Système (1) selon l'une au moins des revendications précédentes, **caractérisé en ce que** les éléments capteurs secondaires (8) sont des capteurs de température (15), des capteurs de position (16), des capteurs de pression (17) et/ou des capteurs d'accélération (18).

7. Système (1) selon l'une au moins des revendications précédentes, **caractérisé en ce que** le modèle de données (11) contient au moins des informations du capteur (2) spécifiques à la production, à savoir des valeurs de réglage et/ou des valeurs d'ajustement.

8. Système (1) selon l'une au moins des revendications précédentes, **caractérisé en ce que** le capteur (2) et le capteur jumeau numérique (9) présentent chacun un numéro d'identification univoque, qui sont liés l'un à l'autre afin d'attribuer de manière univoque le capteur jumeau numérique (9) au capteur (2) et/ou le capteur (2) au capteur jumeau numérique (9).

9. Système (1) selon l'une au moins des revendications précédentes, **caractérisé en ce que** pendant une phase de fonctionnement du capteur (2), les données du capteur (2) sont transmises en continu ou à intervalles fixes au capteur jumeau numérique (9).

10. Système (1) selon l'une au moins des revendications précédentes, **caractérisé en ce que** les données sont des données de paramétrage et/ou des chiffres indicateurs du capteur (2) et/ou des données de capteur secondaire des éléments capteurs secondaires (8).

11. Système (1) selon l'une au moins des revendications précédentes, **caractérisé en ce que** le modèle de données (11) comprend des données de construction, des données fonctionnelles et/ou des données de conception du capteur (2).

12. Système (1) selon l'une au moins des revendications précédentes, **caractérisé en ce que** la base de données (10) est conçue pour envoyer un résultat de simulation de la simulation (14) à une interface homme-machine.

13. Procédé avec un capteur (2), le capteur (2) ayant un boîtier de capteur (3) qui comprend au moins un système électronique (4), au moins une unité de commande et d'évaluation (5) et au moins un élément capteur primaire (6) et au moins des composants mécaniques (7),
et avec un capteur jumeau numérique (9) et une base de données (10) et un modèle de données (11) du capteur (2) et un logiciel (13) de la base de données (10),
dans lequel
le capteur (2) présente au moins un élément capteur secondaire supplémentaire (8) pour détecter les influences environnementales,
le capteur jumeau numérique (9) est présent en association avec le capteur (2),
le capteur jumeau numérique (9) est stocké dans la base de données (10), le capteur jumeau numérique (9) forme le modèle de données (11) du capteur (2),
**caractérisé en ce que**
le capteur (2) et le capteur jumeau numérique (9) sont reliés entre eux par une interface (12), au moins les données du capteur (2) étant transmises au capteur jumeau numérique (9) par l'interface (12),
le logiciel (13) de la base de données (10) est conçu pour effectuer une simulation (14) du capteur jumeau numérique (9), et
la simulation (14) effectuée par le logiciel (13) simule une qualité de la fonction de détection et la compare à la qualité de la fonction de détection du capteur (2).
